# EUROPÄISCHE PATENTSCHRIFT

(11) **EP 2 654 445 B1**
(45) Veröffentlichungstag und Bekanntmachung des Hinweises auf die Patenterteilung: **14.06.2017**
(21) Anmeldenummer: 11801603.9
(22) Anmeldetag: 15.12.2011
(51) Int. Cl.: A23G 3/34, A23G 3/38

(54) **ISOMALTULOSE IN FONDANTS**
ISOMALTULOSE IN FONDANTS
ISOMALTULOSE DANS LES FONDANTS

(30) Priorität: 21.12.2010 DE 102010055577
(43) Veröffentlichungstag der Anmeldung: 30.10.2013
(73) Patentinhaber: Südzucker Aktiengesellschaft Mannheim/Ochsenfurt, 68165 Mannheim (DE)
(72) Erfinder: WALTER, Thomas, 69242 Mühlhausen (DE); MARHÖFER, Stephan, 67599 Gundheim (DE); DÖRR, Tillmann, 67591 Hohen-Sülzen (DE)
(74) Vertreter: Schrell, Andreas
(86) Internationale Anmeldenummer: PCT/EP2011/006325
(87) Internationale Veröffentlichungsnummer: WO 2012/084148

(56) Entgegenhaltungen:
- JP-A- 8 089 175
- US-A1- 2009 202 698

## Beschreibung

Die vorliegende Erfindung betrifft einen Fondant, enthaltend mindestens einen Süßkraftverstärker, Isomaltulose, vorzugsweise Isomaltulose und Trehalose, in Form einer kristallinen Phase und Glucose in Form einer nicht-kristallinen Phase, ein Verfahren zu dessen Herstellung, die Verwendung des Fondants als Überzug für Backwaren sowie Backwaren, die vollständig oder teilweise mit dem erfindungsgemäßen Fondant überzogen sind.

Fondants sind weiche pastöse Zuckermassen, die entweder selbst zur Herstellung verschiedener Süßwaren, als Füllung oder als Glasur von Nahrungs- und Genussmitteln verwendet werden. Zur Herstellung eines Fondants werden beispielsweise Saccharose, Glucosesirup, Invertzuckercreme und/oder Zuckeralkohole und Wasser verwendet. Die Masse wird gekocht und dann durch starkes Kneten und schnelle Abkühlung zu einer weichen Paste verarbeitet. Anschließend können Aromen oder auch Lebensmittelfarben hinzugefügt werden. Fondant wird meist durch Übersättigung einer Saccharoselösung hergestellt. In heißem Wasser wird Saccharose im Überschuss gelöst, wobei der Zucker gelöst bleibt, wenn die Lösung abkühlt und sich so eine übersättigte Lösung bildet. Werden zu einer übersättigten Lösung Impfkristalle gegeben, kristallisiert die gelöste Saccharose aus. Wird die Lösung nicht gerührt, bildet die Saccharose große Kristalle, die eine knusprige, raue Textur des Fondants verursachen. Wird die Lösung jedoch während der Kristallisation stark gerührt oder geknetet, bilden sich feine Kristalle, die eine glatte Textur des Fondants ergeben.

JP 8089175 A offenbart verschiedene Verfahren zur Herstellung von Fondants, wobei kristalline Ausgangsmaterialien, beispielsweise Isomaltulose, mit Zucker- oder Zuckeralkohol-Lösungen gemischt werden, beispielsweise Glukoselösung. US 2009/202698 A1 offenbart die Verwendung von Oligopeptiden als Geschmacksmodulator oder Süßkraftverstärker für Lebensmittel.

Es ist allgemein anerkannt, dass die Süßkraft von Nahrungsmittelelementen eine sehr wichtige Rolle für die Schmackhaftigkeit der Nahrungsmittel spielt. Nahrungs- oder Genussmittel mit einem hohen Zuckergehalt, also vor allem einem hohen Saccharose-Gehalt, werden daher von Konsumenten aufgrund ihrer hohen Süßkraft besonders bevorzugt. Saccharose ist allerdings hoch-glykämisch. Ein hoher Gehalt an hochglykämischen Kohlenhydraten führt bekanntermaßen zu einem schnellen Anstieg des Blutzuckerspiegels. Dies kann zu gesundheitlichen Problemen wie Übergewicht, Insulinresistenz oder Diabetes führen. Es wird daher zunehmend versucht, den Saccharosegehalt in Nahrungs- oder Genussmitteln zu reduzieren. Dies kann einerseits durch Zuckeraustauschstoffe bewerkstelligt werden. Viele Zuckeraustauschstoffe besitzen jedoch nicht die Süßkraft von beispielsweise Saccharose. Häufig werden daher, ggf. zusätzlich, Intensivsüßstoffe eingesetzt. Bei den Intensivsüßstoffen besteht das Problem, dass viele nicht thermisch stabil sind beziehungsweise ein anderes Geschmacksprofil aufweisen als Saccharose, beispielsweise einen bitteren oder adstringierenden Nachgeschmack.

Fondantglasur wird häufig zum Glasieren von Backwaren oder Siedegebäck, beispielsweise Donuts, verwendet. Wird hierbei ein Fondant auf Saccharosebasis eingesetzt, ist die Lagerstabilität beziehungsweise Haltbarkeit des Gebäcks stark begrenzt, da Saccharose hygroskopisch wirkt und die Glasur daher während der Lagerung klebrig wird. Neben Fondants aus Saccharose sind im Stand der Technik auch Fondants aus Trehalose bekannt. Durch einen hohen Wassergehalt neigt die Trehalose als Feststoff jedoch zur Verklumpung und ist daher bei der Verarbeitung nachteilig. Des Weiteren kristallisiert Trehalose im Fondant sehr grob, was zu einer nachteilig rauen Textur der Glasur führt.

Das der vorliegenden Erfindung zugrunde liegende technische Problem liegt daher insbesondere darin, die vorgenannten Nachteile zu überwinden, insbesondere einen Saccharose-freien oder Saccharose-reduzierten Fondant mit einer einem konventionellen Saccharose-Fondant entsprechenden Süße bereitzustellen, der eine hohe Lagerstabilität und eine geringe Hygroskopizität aufweist, und der sich besonders dazu eignet, als glänzender transparenter Nahrungsmittelüberzug oder auch als Füllung eingesetzt zu werden.

Das technische Problem wird gelöst durch die Gegenstände der unabhängigen Ansprüche, insbesondere durch einen Fondant, enthaltend 0,1 bis 1,0 Gewichts-% mindestens eines Süßkraftverstärkers (Gesamtgewicht Süßkraftverstärker bezogen auf die Trockensubstanz (TS) des Fondants) und ein Zuckersystem aus einer kristallinen Phase und einer nicht-kristallinen Phase, wobei der Fondant 65 bis 95 Gewichts-% mindestens eines Zuckers (Gesamtgewicht Zucker in kristalliner Phase bezogen auf TS des Fondants) in Form einer kristallinen Phase und 4 bis 34 Gewichts-% Glucosesirup in Form einer nicht-kristallinen Phase (Gesamtgewicht Glucosesirup in nicht-kristalliner Phase bezogen auf TS des Fondants) aufweist und wobei die kristalline Phase aus Isomaltulose besteht, oder aus einer Mischung von Isomaltulose und Trehalose besteht, die 40 bis 99 Gewichts-% Isomaltulose und 60 bis 1 Gewichts-% Trehalose umfasst, oder aus einer Mischung von Isomaltulose, Trehalose und Saccharose besteht, die 40 bis 99 Gewichts-% Isomaltulose und 60 bis 1 Gewichts-% Trehalose (Gesamtgewicht jeweils bezogen auf die kristalline Phase) umfasst.

Gemäß der Erfindung ist daher vorgesehen, dass der Fondant ein zweiphasiges Zuckersystem aufweist, wobei eine Phase eine kristaline und eine andere Phase eine nicht-kristalline Phase ist. Erfindungsgemäß ist vorgesehen, dass die kristalline Phase aus Isoma-Itulose gebildet wird, dass heißt Isomaltulose kristallin im Fondant vorliegt. Erfindungsgemäß ist auch vorgesehen, dass die nicht-kristalline Phase Glucosesirup aufweist. In einer besonders bevorzugten Ausführungsform ist demgemäß vorgesehen, dass der Fondant eine kristalline Phase bestehend aus Isomaltulose und eine nicht-kristalline Phase, enthaltend, insbesondere bestehend aus Glucosesirup, aufweist. In einer weiteren bevorzugten Ausführungsform ist vorgesehen, dass der erfindungsgemäße Fondant eine kristalline Phase bestehend aus Isomaltulose und Trehalose und eine nicht-kristalline Phase, enthaltend, insbesondere bestehend aus Glucosesirup, aufweist, wobei die kristalline Phase aus Isomaltulose und Trehalose 40 bis 99 Gewichts-%, insbesondere 60 bis 95 Gewichts-%, insbesondere 70 bis 80 Gewichts-%, insbesondere 50 bis 90 Gewichts-%, insbesondere 50 bis 80 Gewichts-%, insbesondere 50 bis 70 Gewichts-% und insbesondere 55 bis 65 Gewichts-% Isomaltulose und insbesondere 60 bis 1 Gewichts-%, insbesondere 40 bis 5 Gewichts-%, insbesondere 30 bis 20 Gewichts-%, insbesondere 50 bis 10 Gewichts-%, insbesondere 50 bis 20 Gewichts-%, insbesondere 50 bis 30 Gewichts-% und insbesondere 45 bis 35 Gewichts-% Trehalose umfasst (jeweils Gesamtgewicht der Isomaltulose oder Trehalose bezogen auf Gesamtgewicht der kristallinen Phase). In einer weiteren bevorzugten Ausführungsform ist vorgesehen, dass der erfindungsgemäße Fondant eine kristalline Phase bestehend aus Isomaltulose, Trehalose und Saccharose, und eine nicht-kristalline Phase enthaltend, inbesondere bestehend aus, Glucosesirup, aufweist, wobei die kristalline Phase 40 bis 99 Gewichts-% Isomaltulose und 60 bis 1 Gewichts-% Trehalose umfasst (jeweils Gesamtgewicht der Isomaltulose oder Trehalose bezogen auf Gesamtgewicht der kristallinen Phase).

In einer besonders bevorzugten Ausführungsform der vorliegenden Erfindung weist der Fondant 0,1 bis 1,0 Gewichts-% mindestens eines Süßkraftverstärkers (Gesamtgewicht Süßkraftverstärker bezogen auf Trockensubstanz des Fondants) und ein Zuckersystem aus einer kristallinen Phase und einer nicht-kristallinen Phase auf, wobei der Fondant 80 bis 89 Gewichts-%, insbesondere 81 bis 88 Gewichts-%, vorzugsweise 84 Gewichts-% Zucker, insbesondere Isomaltulose, oder ein Gemisch aus Isomaltulose und Trehalose oder ein Gemisch aus Isomaltulose und Trehalose und Saccharose (Gesamtgewicht Isomaltulose, und optional Trehalose und optional Saccharose, bezogen auf Trockensubstanz des Fondants) in Form einer kristallinen Phase und 10 bis 19 Gewichts-%, vorzugsweise 11 bis 18 Gewichts-%, vorzugsweise 16 Gewichts-% Glucosesirup, in Form einer nicht-kristallinen Phase (Gesamtgewicht Glucosesirup bezogen auf Trockensubstanz des Fondants) aufweist.

Im Zusammenhang mit der vorliegenden Erfindung addieren, soweit nicht anders angegeben und/oder erkenntlich, die für eine Zusammensetzung von Komponenten angegebenen prozentualen Anteile einzelner Komponenten auf 100 %, d. h. die Gesamtzusammensetzung, auf.

Im Zusammenhang mit der vorliegenden Erfindung wird unter einem "Zuckersystem" ein Gemisch mindestens zwei unterschiedlicher Zucker verstanden. Im Zusammenhang mit der vorliegenden Erfindung wird unter einem "Zuckersystem aus einer kristallinen Phase und einer nicht-kristallinen Phase" ein Gemisch mindestens zweier Zucker verstanden, wobei einer der Zucker kristallin und mindestens ein weiterer Zucker nicht-kristallin, insbesondere als Sirup, vorliegt.

Besonders bevorzugt weist der Glucosesirup einen Feststoffgehalt von 60 bis 90 Gewichts-%, insbesondere 65 bis 85 Gewichts-%, insbesondere 70 bis 85 Gewichts-%, vorzugsweise 74 bis 80 Gewichts-% (TS bezogen auf das Gesamtgewicht des Glucosesirups) auf.

In bevorzugter Ausführungsform weist der Fondant als einzige Zucker Isomaltulose und Glucosesirup auf. In bevorzugter Ausführungsform weist der Fondant als einzige Zucker Isomaltulose, Trehalose und Glucosesirup auf. In bevorzugter Ausführungsform ist der Fondant frei von Saccharose. In einer bevorzugten Ausführungsform kann der Fondant zusätzlich zu Isomaltulose oder zusätzlich zu Trehalose und Isomaltulose auch Saccharose in der kristallinen Phase enthalten. In einer Ausführungsform kann der Fondant neben den vorgenannten Zuckern, nämlich Isomaltulose, Glucosesirup und Trehalose, weitere Zucker, z. B. Trehalulose, enthalten.

In einer bevorzugten Ausführungsform der vorliegenden Erfindung weist der Fondant keine Zuckeraustauschstoffe, insbesondere keine Zuckeralkohole, und/oder keine Intensivsüßstoffe auf.

Überraschenderweise wurde gefunden, dass der erfindungsgemäße Fondant in einer bevorzugten Ausführungsform eine besonders glatte, glänzende und transparente Glasur mit feinen Kristallen auf Nahrungsmitteln, zum Beispiel Backwaren, insbesondere Siedegebäcken, ergibt. Auch bei einer Verwendung der Fondants bei 40 bis 50° C auf beispielsweise heißen Siedegebäcken wird ein schnelles Abtrocknen der Glasur auf dem Gebäck gewährleistet. Des Weiteren ist die Lagerstabilität des erfindungsgemäßen Fondants deutlich erhöht und die Hygroskopizität niedrig. Vorteilhafterweise zieht ein Überzug aus erfindungsgemäßem Fondant wenig bis gar kein Wasser aus dem Inneren des überzogenen Produkts und der Umgebungsluft. Bei Verwendung als Überzug, z. B. als Glazing, also transparenter Überzug, ergibt sich eine besonders geringe Klebrigkeit. Der erfindungsgemäße Fondant weist vorteilhafterweise ein Geschmacksprofil und vor allem eine Süßkraft auf, die einem Saccharose-haltigen, insbesondere konventionellem Saccharose-haltigen Fondant entspricht.

Isomaltulose ist ein niedrig-glykämisches Saccharose-Isomer, das auch unter dem Namen Palatinose^{™} bekannt ist. Isomaltulose wird zumeist enzymatisch durch Fermentation hergestellt und wirkt akariogen. In bevorzugter Ausführungsform wird Isomaltulose in Form von kristalliner Isomaltulose verwendet, wobei diese in bevorzugter Form in pulveriger Form vorliegen kann. Besonders bevorzugt wird Palatinose^{™} PST-N, d. h. Isomaltulose mit einer Kristallteilchengröße von 90 % < 0,7 mm, oder Palatinose^{™} PST-PA, d. h. eine Isoma-Itulose mit einer Kristallteilchengröße von 90 < 0,05 mm, verwendet. In besonders bevorzugter Ausführungsform kann auch Palatinose^{™} PST-PF, d. h. Isomaltulose mit einer Kristallteilchengröße 90 % < 0,1 mm oder Palatinose^{™} PAP-N, d. h. Isomaltulose mit einer Kristallteilchengröße 90 % < 0,7 mm, verwendet werden. In bevorzugter Weise weist die Isomaltulose in der kristallinen Phase eine Kristallteilchengröße von 1 bis 100 µm, insbesondere 10 bis 90 µm, 20 bis 80 µm, 30 bis 80 µm, 40 bis 80 µm, insbesondere 50 bis 80 µm, besonders bevorzugt 10 bis 60 µm, inbesondere 20 bis 60 µm, insbesondere 30 bis 60 µm, vorzugsweise 10 bis 50 µm, insbesondere 20 bis 50 µm auf. Der erfindungsgemäße Fondant weist bevorzugt eine Kristallteilchengröße der Isomaltulose in der kristallinen Phase von 90 % < 70 µm, insbesondere von 90% < 50 µm, besonders bevorzugt von 90% < 40 µm auf. Die Verwendung von kristalliner Isoma-Itulose dieser Partikelgrößen, insbesondere von 90 % < 50 µm, führt in bevorzugter Ausführungsform zum Erhalt eines glatten und glänzenden Fondants mit feinen Kristallen. Vorteilhafterweise neigt Isomaltulose als Feststoff mit diesen Kristallteilchengrößen weniger zum Verklumpen, da der Wassergehalt in einer Ausführungsform nur ca. 5 % beträgt. Dies ermöglicht eine bessere Verarbeitbarkeit verglichen mit der alleinigen Verwendung von Trehalose in einem Fondant, deren Wassergehalt 10 % betragen kann.

Glucosesirup wird bevorzugt aus Stärke hergestellt und enthält neben Glucose hauptsächlich Di-, Tri- und Oligomere. Im Zusammenhang mit der vorliegenden Erfindung wird unter Glucosesirup insbesondere eine vorzugsweise aus Stärke durch Hydrolyse, z. b. enzymatische Aufspaltung, gewonnene Lösung verstanden, die im Wesentlichen Glucose, aber auch höhermolekulare Stärkebruchstücke aufweist. In besonders bevorzugter Ausführungsform liegt Glucosesirup in Form einer wässrigen Lösung vor. In besonders bevorzugter Ausführungsform weist Glucosesirup einen Trockensubstanzgehalt von 75 bis 85 Gewichts-%, insbesondere 80 bis 85 Gewichts-%, insbesondere 83 bis 84 Gewichts-% auf. In besonders bevorzugter Ausführungsform weist Glucosesirup einen DE(Dextroseäquivalent)-Wert von 35 bis 45, insbesondere 38 bis 42, vorzugsweise 40 (DE) auf.

Die vorliegende Erfindung setzt zusätzlich zu Isomaltulose und Glucosesirup einen Süßkraftverstärker ein. Im Zusammenhang mit der vorliegenden Erfindung wird unter einem Süßkraftverstärker eine Substanz verstanden, die im Unterschied zu Intensivsüßstoffen selbst keinen oder kaum süßen Geschmack, d. h. keine oder nur sehr geringe Eigensüße, aufweist, jedoch die Süße einer anderen süßen Substanz verstärken kann.

Im Zusammenhang mit der vorliegenden Erfindung ist ein Süßkraftverstärker insbesondere eine Substanz, die den süßen Geschmack einer 5 %igen Saccharoselösung um 10 bis 30 % erhöht, insbesondere bis zu einer maximalen Süße einer 6,5 %igen Zuckerlösung.

Gegebenenfalls hat der eingesetzte Süßkraftverstärker auch einen Effekt auf das gesamte Geschmacksprofil des Produktes, das heißt verbessert beispielsweise das Mundgefühl. Süßkraftverstärker werden zumeist in einer geringen Dosis eingesetzt und verstärken synergistisch die Süßkraft eines anderen vorhandenen Süßungsmittels. Im Zusammenhang mit der vorliegenden Erfindung ist ein Süßkraftverstärker kein Intensivsüßstoff. Im erfindungsgemäßen Fondant können in einer Ausführungsform insbesondere alle bekannten Süßkraftverstärker eingesetzt werden.

In einer bevorzugten Ausführungsform der vorliegenden Erfindung ist der Süßkraftverstärker ein Pflanzenextrakt. Es können jedoch selbstverständlich auch synthetische oder künstliche Süßkraftverstärker eingesetzt werden.

Der erfindungsgemäße Fondant enthält in besonders bevorzugter Ausführungsform 5 bis 50 Gewichts-%, bevorzugt 7 bis 40 Gewichts-%, besonders bevorzugt 20 bis 40, vorzugsweise 20 bis 30 Gewichts-%, insbesondere 25 bis 30 Gewichts-%, insbesondere 10 bis 35 Gewichts-% Wasser (bezogen auf das Gesamtgewicht des Fondants), insbesondere in der nicht-kristallinen Phase. Die Erfindung betrifft jedoch auch einen Fondant mit erheblich geringeren Wasseranteilen, insbesondere Fondants, die in fertiger Form vorliegen, beispielsweise als Überzug auf einem Produkt aufgetragen sind. In einer besonders bevorzugten Ausführungsform weist der erfindungsgemäße Fondant einen Trockensubstanzgehalt von 60 bis 93 Gewichts-%, vorzugsweise 65 bis 90 Gewichts-%, insbesondere 65 bis 85 Gewichts-%, insbesondere 70 bis 90 Gewichts-%, insbesondere 70 bis 80 Gewichts-% auf, wobei der auf 100 Gewichts-% (bezogen auf Gesamtgewicht des Fondants) aufaddierende Anteil Wasser ist.

In einer Ausführungsform der vorliegenden Erfindung enthält der Fondant 0,01 bis 0,3 Gewichts-%, vorzugsweise 0,01 bis 0,1 Gewichts-%, insbesondere 0,01 bis 0,8 Gewichts-% (Gesamtgewicht Verdickungsmittel bezogen auf Trockensubstanz des Fondants) eines oder mehrerer Verdickungsmittel, ausgewählt aus der Gruppe bestehend aus Agar, Carrageen und Xanthan. Die Verwendung von mindestens einem Verdickungsmittel ist insbesondere für die Verwendung des Fondants als Überzugsfondant von besonderer Vorteilhaftigkeit. Vorteilhafterweise wird die Rekristallisation von Komponenten des Zuckersystems verhindert und die Flexibilität und Stabilität des Überzugs gewährleistet, auch über einen längeren Zeitraum.

Bevorzugt enthält der erfindungsgemäße Fondant 0,01 bis 3 Gewichts-%, vorzugsweise 0,01 bis 1 Gewichts-%, insbesondere 0,01 bis 0,8 Gewichts-% (Gesamtgewicht Säure bezogen auf Trockensubstanz des Fondants) einer lebensmittelverträglichen organischen Säure, eines Aromas oder von beidem. Besonders bevorzugt ist die lebensmittelverträgliche organische Säure Zitronensäure oder Laktobionsäure. In besonders bevorzugter Ausführungsform betrifft die vorliegende Erfindung einen Fondant, der neben dem mindestens einen Süßkraftverstärker auch mindestens eine Säure, insbesondere eine lebensmittelverträgliche Säure, vorzugsweise Zitronensäure oder Lactobionsäure aufweist. Derartige Produkte zeichnen sich durch ein besonders ausgewogenes Geschmacksprofil aus.

Es kann auch vorgesehen sein, dass der erfindungsgemäße Fondant Lebensmittelfarbe enthält.

Gegenstand der Erfindung ist auch ein Verfahren zur Herstellung eines Fondants, insbesondere des erfindungsgemäßen Fondants, wobei in einem Verfahrensschritt a) kristalline Isomaltulose mit einer nicht-kristallinen Phase, enthaltend oder bestehend aus Glucosesirup, und Wasser gemischt wird, in einem Verfahrensschritt b) Isoma-Ituloseimpfkristalle in das in Verfahrenschritt a) erhaltene Gemisch gegeben werden, und in einem Verfahrensschritt c) mindestens ein Süßkraftverstärker in das in Verfahrensschritt b) erhaltene Gemisch gegeben wird, wobei ein Fondant erhalten wird.

In bevorzugter Ausführungsform wird in Verfahrensschritt a) kristalline Isomaltulose und kristalline Trehalose mit einer nicht-kristallinen Phase, enthaltend oder bestehend aus Glucosesirup, und Wasser gemischt, in einem Verfahrensschritt b) Isomaltulose-Impfkristalle zugegeben und in einem Verfahrensschritt c) mindestens ein Süßkraftverstärker in das in Verfahrensschritt b) erhaltene Gemisch gegeben, wobei ein Fondant erhalten wird.

In besonders bevorzugter Ausführungsform kann vorgesehen sein, dass in die im Verfahrensschritt a) eingesetzte nicht-kristalline Phase enthaltend Glucosesirup und Wasser mindestens ein Verdickungsmittel eingebracht ist. In dieser bevorzugten Ausführungsform kann der erhaltene Fondant bevorzugt als Überzugsfondant eingesetzt werden.

In einer weiteren bevorzugten Ausführungsform kann vorgesehen sein, dass das Einbringen der kristallinen Zuckerkomponenten, die die kristalline Phase ausbilden, also insbesondere Isomaltulose oder Isomaltulose und Trehalose, in eine erhitzte nicht-kristalline Phase erfolgt, insbesondere eine nicht-kristalline Phase mit einer Temperatur von 70 bis 98° C, insbesondere 80 bis 96° C.

In besonders bevorzugter Ausführungsform kann vorgesehen sein, dass die in Verfahrensschritt a) eingebrachte Isomaltulose oder Isomaltulose und Trehalose im Verfahrensschritt a) in der nicht-kristallinen Phase vollständig gelöst wird, insbesondere in einem erhitzten Gemisch, vorzugsweise bei Temperaturen von 80 bis 98° C, insbesondere 85 bis 95° C.

In besonders bevorzugter Ausführungsform kann vorgesehen sein, dass nach Lösung der kristallinen Zucker in der nicht-kristallinen Phase ein Absenken der Temperatur erfolgt, vorzugsweise auf Temperaturen von 40 bis 70° C, insbesondere 45 bis 60° C, insbesondere 50° C. In besonders bevorzugter Ausführungsform kann vorgesehen sein, nach Absenken der Temperatur die Kristallisation durch Zugabe von Isomaltuloseimpfkristallen gemäß Verfahrensschritt b) durchzuführen.

Im Anschluss an die oder während der Zugabe der Impfkristalle wird der mindestens eine Süßkraftverstärker in Verfahrensschritt c) hinzugegeben. Anschließend kann die Suspension in bevorzugter Ausführungsform gerührt werden. Vorzugsweise wird die nach Auskristallisation gebildete Suspension für 8 bis 10 Stunden, insbesondere 10 bis 12 Sunden reifen gelassen, wobei eine Nachkristallisation stattfindet.

Gegenstand der vorliegenden Erfindung ist auch die Verwendung des erfindungsgemäßen Fondants als Überzugsfondant für Nahrungs- und Genussmittel, insbesondere für Backwaren. Besonders bevorzugt wird der Fondant, insbesondere zur Glasierung, halbfest oder flüssig mit einem Wassergehalt von 7 bis 40 Gewichts-%, insbesondere 10 bis 30 Gewichts-%, vorzugsweise 20 bis 30 Gewichts-% verwendet. In einer bevorzugten Ausführungsform liegt der erfindungsgemäße Fondant als fertiger getrockneter Überzug mit einem Wassergehalt von 0,1 bis 1 Gewichts-%, insbesondere 0,3 bis 0,5 Gewichts-% vor.

In einer besonders bevorzugten Ausführungsform der vorliegenden Erfindung wird der erfindungsgemäße Fondant zur Glasierung von Backwaren, insbesondere Siedegebäcken, Kuchen, Torten, Keksen, Waffeln, Konditoreiprodukten, Patisserieprodukten oder ähnlichem verwendet.

Gegenstand der Erfindung ist auch ein Nahrungs- und Genussmittel, insbesondere eine Backware, die vollständig oder teilweise mit dem erfindungsgemäßen Fondant überzogen ist, wobei der erfindungsgemäße Fondant bevorzugt transparent ist.

In besonders bevorzugter Ausführungsform eignen sich Trehalosehaltige Fondants der vorliegenden Erfindung zur Herstellung von Produkten, die mit einem erfindungsgemäßen Fondant überzogen sind, wobei der erfindungsgemäße Fondantüberzug vorteilhafterweise transparent ist, also als Glazing vorliegt.

Die vorliegende Erfindung betrifft auch die Verwendung des erfindungsgemäßen Fondants als Füllung, insbesondere von Nahrungs- und Genussmitteln, insbesondere Süßwaren, insbesondere Süßigkeiten, wie Konfekt oder Konditoreiprodukten. In besonders bevorzugter Ausführungsform kann der Fondant der vorliegenden Erfindung daher als Füllung von zum Beispiel Schokoladeprodukten, Konditoreiprodukten, Patisserieprodukten, Pralinen, Konfekt oder ähnlichem eingesetzt werden.

Gegenstand der Erfindung ist auch ein Nahrungs- oder Genussmittel, insbesondere eine Süßware, die einen Fondant der vorliegenden Erfindung enthält.

Die vorliegende Erfindung betrifft daher auch Produkte, insbesondere Nahrungs- und Genussmittel, die einen Fondant der vorliegenden Erfindung enthalten.

Weitere vorteilhafte Ausgestaltungen der Erfindung ergeben sich aus den Unteransprüchen.

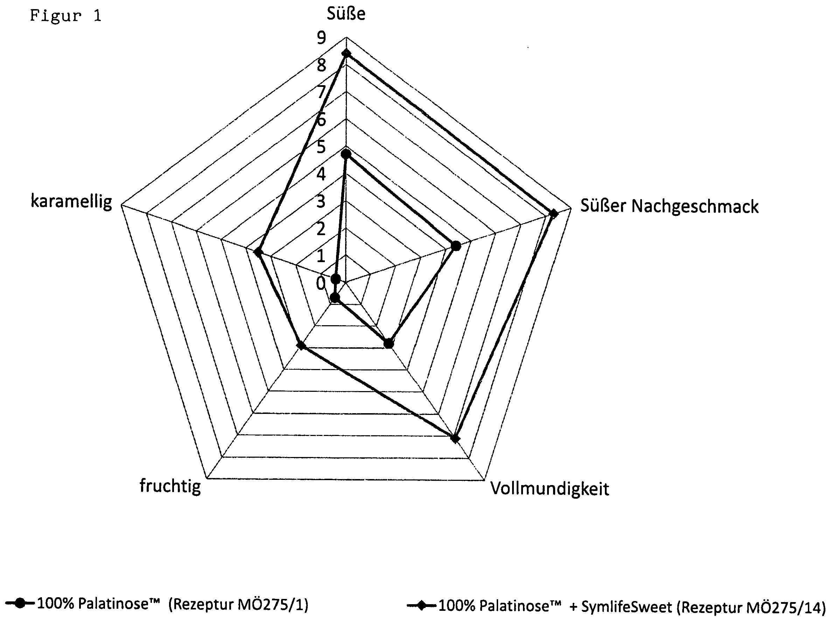

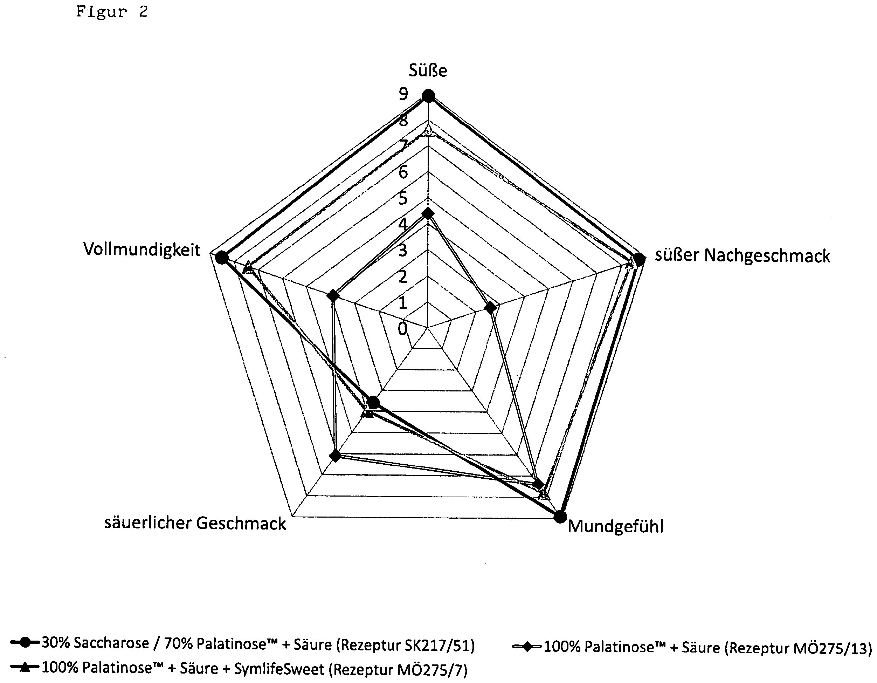

Die vorliegende Erfindung wird in den folgenden Beispielen und den Figuren 1 und 2 näher erläutert.

Die Figuren 1 und 2 zeigen grafisch die sensorischen Effekte der erfindungsgemäßen Glasuren auf.

### Beispiel 1

### Rohstoffe und Geräte:

Palatinose™ (Isomaltulose) PST-N (Kristallinität: 90 % < 0,7 mm), Palatinose™ PST-PA (Partikel: 90 % < 50 µm), Trehalose, Fa. Hayashibara, Saccharose RF, Fa. SÜDZUCKER, Glukosesirup DE40, Fa. Agrana und Verdickungsmittel Agar Agar Fa. Egesie, Symlife® Sweet 362224, Fa. Symrise
Laborwaage, Heizplatte, 2-ltr. Kochtopf, Schneebesen, 3x Bechergläser, Hobart-Küchenmaschine mit Planetenrührer und einer 3 Ltr. Rührschüssel, Löffel, Thermometer, Wasserbad, Teigschaber, 1 kg Musterdosen.

### Rezepturen:

In der folgenden Tabelle 1 sind erfindungsgemäße und nichterfindungsgemäße Fondantrezepturen (bezeichnet als "Test") aufgeführt, die gemäß der nachstehenden Herstellvorschriften (vergleich auch Tabelle 2) zu Fondants verarbeitet wurden. Nichterfindungsgemäße Rezepturen sind insbesondere solche, die allein Saccharose als kristallinen Zucker aufweisen, die keinen Süßkraftverstärker oder keine Isomaltulose aufweisen.

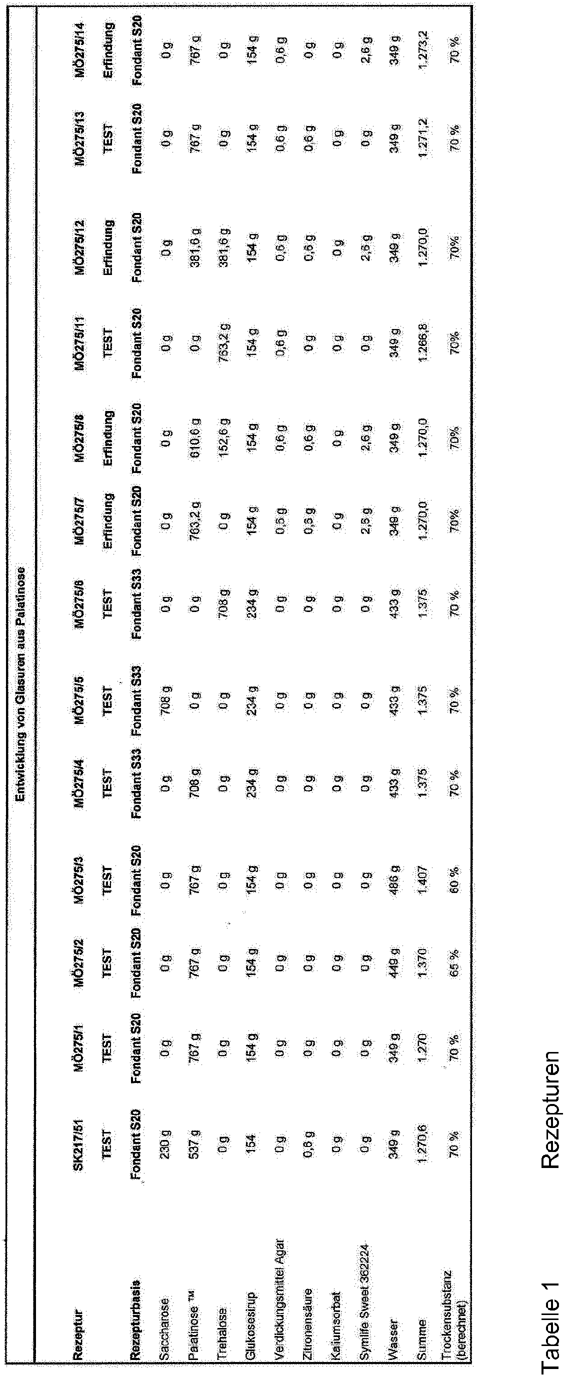

### Herstellung:

1) Herstellung der wässrigen Phase im 2 Ltr. Kochtopf
   a) Wasser, Glukosesirup (TS des Glucosesirups: 80 %, DE 38-42) und ggf. das Verdickungsmittel, z. B. Agar-Agar, im Kochtopf vorlegen und auf der Heizplatte auf 95 °C erhitzen (Dauer 3 bis 5 Minuten).
   b) Die Temperatur von 95 °C im Ansatz wird 5 Minuten gehalten, um eine vollständige Lösung des Verdickungsmittels Agar zu garantieren.
   c) Der Wasserverlust wird ausgeglichen.
   d) Anschließend wird die in der Tabelle 1 angegebene Menge des kristallinen Zuckers (je nach angegebener Rezeptur Saccharose, Palatinose^{™} und/oder Trehalose) für die Ausbildung der kristallinen Phase in den Kochtopf mit dazu gewogen. Die Temperatur des Ansatzes sinkt dabei von 95 °C auf ca. 50 °C ab.
   e) Die Masse wird unter ständigem Rühren auf 90 °C bis 95 °C erhitzt, um den Zucker vollständig zu lösen (Dauer 3 bis 5 Minuten). Der Wasserverlust wird nochmals korrigiert. Der Zucker ist optisch bei > 75 °C gelöst.
   f) Die heiße Lösung wird in die 3 Ltr. Hobart-Schüssel überführt. In einem Wasserbad (Wassertemperatur ca. 15 °C) wird die Temperatur der übersättigten Lösung auf ca. 50 °C unter Rühren abgesenkt (Dauer 3 bis 5 Minuten) und ein gestrichener Teelöffel Palatinose™, PST-PA, zugegeben, um die Kristallisation zu starten. Nach der erfolgten Kristallisation wird je nach angegebener Rezeptur der Süßkraftverstärker eingemischt.
   g) Nach einer Rührzeit von 15 Minuten ist eine milchig, trübe Suspension entstanden. Die Masse wird in eine 1 kg Musterdose abgefüllt und über Nacht zum Reifen bei Raumtemperatur ruhen lassen. In dieser Zeit findet eine Nachkristallisierung statt. Die Masse wird fester.

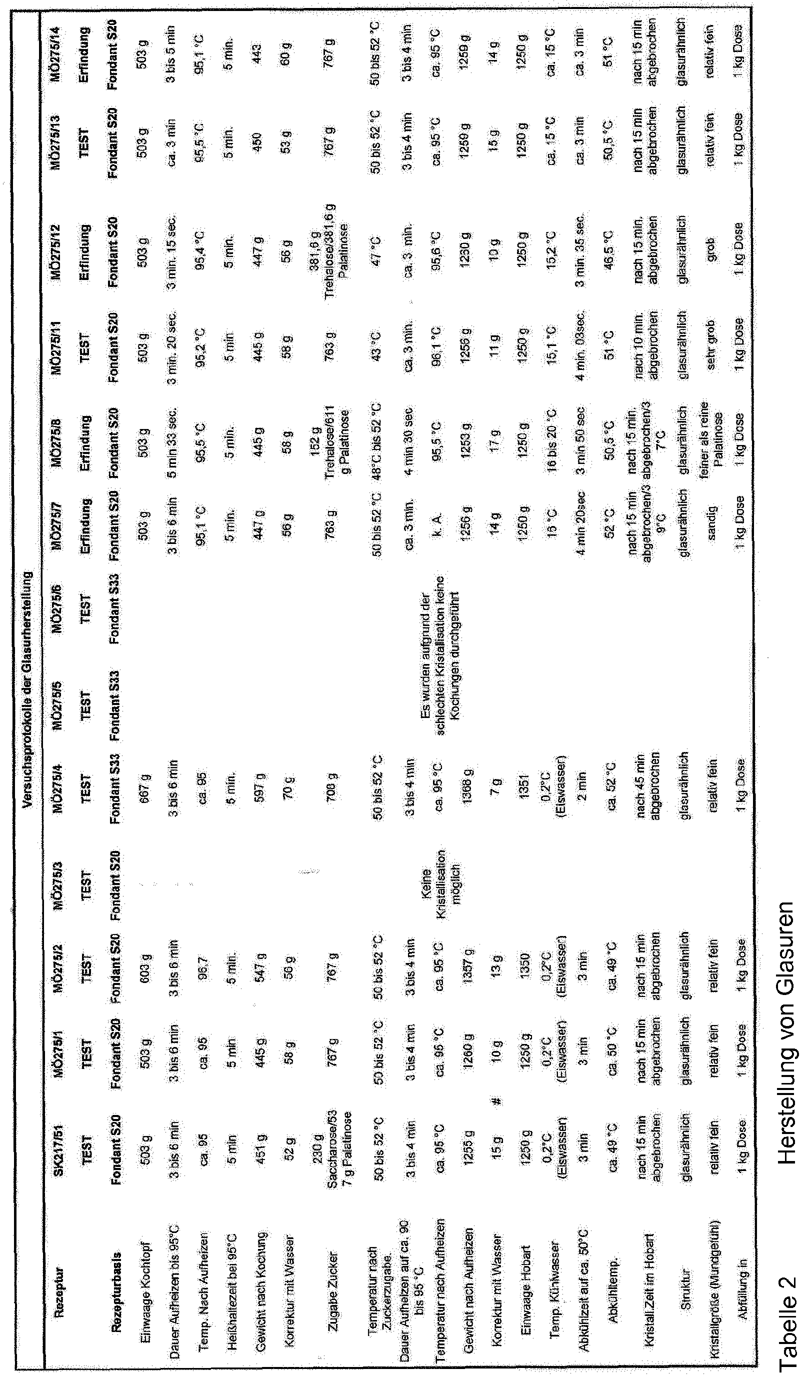

### Anwendungstechnische Versuche:

Die Glasuren werden bei 40 °C bis 50 °C auf heiße Donuts (ca. 75°C) verarbeitet und diese bei Raumtemperatur über 8 Tage gelagert.

### Ergebnisse:

Die durchgeführten Versuche und erzielten Ergebnisse zeigen, dass die aufgetragenen erfindungsgemäßen Fondants, d. h. die Produktglasur, innerhalb weniger Sekunden abtrockneten und in vorteilhafter Weise eine klare und transparente Glasur gebildet wird. Die Stabilität der Glasur ist sehr gut und auch nach acht Tagen Lagerung immer noch gegeben, wobei die Glasur in vorteilhafter Weise auch nach diesem langen Lagerungszeitpunkt transparent ist. Ein Nachkristallisieren der Glasurkomponenten tritt in nur geringem Umfang auf, wobei vorteilhafterweise der Einsatz von Trehalose in der Glasur keine Nachkristallisation verursacht, insbesondere keine, die zusätzlich zu einer möglicherweise vorliegenden, dann aber nur leichten, durch Isomaltulose hervorgerufenen Nachkristallisation vorliegt. In besonders bevorzugter Ausführungsform wird gezeigt, dass eine Kombination der Zucker Trehalose und Isomaltulose den Effekt einer Nachkristallisation, wie sie beim Überzug aus 100 % Isomaltulose entsteht, reduziert. Darüber hinaus stellt sich insbesondere durch die Verwendung von Isomaltulose eine besonders gute Verarbeitbarkeit des Fondants dar. Die Isomaltulose kristallisiert im vorstehend beschriebenen Verfahren fein aus, sie ist gut verarbeitbar und die Fließfähigkeit ist nicht eingeschränkt. Die Verwendung von Trehalose erweist sich als besonders vorteilhaft, als dass eine Reifezeit der Glasur nicht notwendig ist bzw. diese verkürzt wird.
In Figur 1 ist das Ergebnis eines Verkostungsexperimentes dargestellt. Die erfindungsgemäße Rezeptur MÖ275/14 wurde verglichen mit der Kontrolle 275/1. Die Verwendung der erfindungsgemäßen Fondantrezeptur führt zu einem erheblich verbesserten Geschmacksprofil, nämlich einem deutlich verbesserten Süßeempfinden, einer verbesserten Vollmundigkeit, einem deutlich erkennbar süßeren Nachgeschmack und darüber hinaus auch einer verbesserten Fruchtigkeit und stärkerem Empfinden eines karamelligen Geschmacks.
Figur 2 zeigt grafisch die Ergebnisse eines weiteren Verkostungsexperimentes. Im Rahmen dieses Experimentes wurde die erfindungsgemäße Fondantrezeptur MÖ275/7 verglichen mit den Kontrollen MÖ275/13 und SK217/51. Es zeigt sich, dass die erfindungsgemäße Rezeptur MÖ275/7 ein erheblich vollmundigeres, süßeres Geschmacksempfinden gegenüber der Kontrollrezeptur 275/13 auslöst und darüber hinaus zu einem signifikant süßeren Nachgeschmack und einem verbesserten Mundgefühl führt. In all diesen Parametern entspricht die erfindungsgemäße Fondantrezeptur dem Geschmacksempfinden, das mittels einer Saccharose-haltigen Rezeptur erreicht wird.

## Patentansprüche

1. Fondant, enthaltend 0,1 bis 1,0 Gewichts-% mindestens eines Süßkraftverstärkers (Gesamtgewicht Süßkraftverstärker bezogen auf Trockensubstanz (TS) des Fondants) und ein Zuckersystem aus einer kristallinen Phase und einer nicht-kristallinen Phase, wobei der Fondant 65 bis 95 Gewichts-% mindestens eines Zuckers (Gesamtgewicht Zucker in kristalliner Phase bezogen auf TS des Fondants) in Form einer kristallinen Phase und 4 bis 34 Gewichts-% Glucosesirup in Form einer nicht-kristallinen Phase (Gesamtgewicht Glucosesirup in nicht-kristalliner Phase bezogen auf TS des Fondants) aufweist und wobei die kristalline Phase aus Isomaltulose besteht, oder aus einer Mischung von Isomaltulose und Trehalose besteht, die 40 bis 99 Gewichts-% Isomaltulose und 60 bis 1 Gewichts-% Trehalose umfasst, oder aus einer Mischung von Isomaltulose, Trehalose und Saccharose besteht, die 40 bis 99 Gewichts-% Isomaltulose und 60 bis 1 Gewichts-% Trehalose (Gesamtgewicht jeweils bezogen auf die kristalline Phase) umfasst.

2. Fondant nach Anspruch 1, wobei die Partikelgröße der Isoma-Itulose in der kristallinen Phase zu 90 % < 50 µm ist.

3. Fondant nach Anspruch 1 oder 2, wobei der Süßkraftverstärker ein Pflanzenextrakt ist.

4. Fondant nach einem der vorstehenden Ansprüche, wobei der Fondant 0,9 bis 40 Gewichts-% Wasser (bezogen auf Gesamtgewicht des Fondants) enthält.

5. Fondant nach einem der vorstehenden Ansprüche, wobei der Fondant 0,01 bis 0,3 Gewichts-% (Gesamtgewicht Verdickungsmittel bezogen auf TS des Fondants) Verdickungsmittel enthält, ausgewählt aus der Gruppe bestehend aus Agar, Carrageen und Xanthan.

6. Fondant nach einem der vorstehenden Ansprüche, wobei der Fondant 0,01 bis 3 Gewichts-% (Gesamtgewicht Säure bezogen auf TS des Fondants) einer lebensmittelverträglichen organischen Säure, eines Aromas oder von beidem enthält.

7. Fondant nach Anspruch 6, wobei die lebensmittelverträgliche organische Säure Zitronensäure oder Lactobionsäure ist.

8. Verfahren zur Herstellung eines Fondants, insbesondere eines Fondants gemäß der Ansprüche 1 bis 7, wobei in einem Verfahrensschritt a) kristalline Isomaltulose mit einer nicht-kristallinen Phase, enthaltend Glucosesirup, und Wasser gemischt wird, in einem Verfahrensschritt b) Isomaltuloseimpfkristalle in das in Verfahrensschritt a) erhaltene Gemisch gegeben werden und in einem Verfahrensschritt c) mindestens ein Süßkraftverstärker in das in Verfahrensschritt b) erhaltene Gemisch gegeben und wobei ein Fondant erhalten wird.

9. Verfahren nach Anspruch 8, wobei in einem Verfahrensschritt a) kristalline Isomaltulose und kristalline Trehalose mit der nicht-kristallinen Phase gemischt werden.

10. Verfahren nach einem der Ansprüche 8 oder 9, wobei in Verfahrensschritt a) die kristalline Isomaltulose und optional vorhandene kristalline Trehalose unter Erhitzung in der nicht-kristallinen Phase vollständig gelöst werden.

11. Verwendung des in einem der Ansprüche 1 bis 7 charakterisierten Fondants als Überzug von Nahrungs- oder Genussmitteln, insbesondere Backwaren, oder Füllung von Süßwaren.

12. Verwendung nach Anspruch 11, wobei der Fondant zur Verwendung halbfest oder flüssig mit einem Wassergehalt von 7 bis 40 % vorliegt.

13. Verwendung nach Anspruch 11 oder 12, wobei der Fondant als Überzug verwendet wird und als fertiger getrockneter Überzug einen Wassergehalt von 0,3 bis 0,5 % aufweist.

14. Verwendung nach einem der Ansprüche 11 bis 13, wobei die Backware ein Siedegebäck, ein Kuchen, eine Torte, ein Keks, eine Waffel, ein Konditoreiprodukt, ein Patisserieprodukt oder ähnliches ist.

15. Nahrungs- oder Genussmittel, das vollständig oder teilweise mit einem Fondant gemäß der Ansprüche 1 bis 7 überzogen ist.

16. Nahrungs- oder Genussmittel nach Anspruch 15, wobei der Fondant transparent ist.

17. Süßware, die einen Fondant nach einem der Ansprüche 1 bis 7 als Füllung enthält.

## Claims

1. A fondant containing 0.1 to 1.0% by weight of at least one sweetness enhancer (total weight of sweetness enhancer(s) based on the dry substance (DS) of the fondant), and a sugar system comprised of a crystalline phase and a non-crystalline phase, wherein said fondant comprises 65 to 95% by weight of at least one sugar (total weight of sugar in the crystalline phase based on the DS of the fondant) in the form of a crystalline phase and 4 to 34% by weight of glucose syrup in the form of a non-crystalline phase (total weight of glucose syrup in the non-crystalline phase based on the DS of the fondant) and wherein the crystalline phase consists of isomaltulose, or of a mixture of isomaltulose and trehalose comprising 40 to 99% by weight of isomaltulose and 60 to 1% by weight of trehalose, or a mixture of isomaltulose, trehalose and sucrose comprising 40 to 99% by weight of isomaltulose and 60 to 1% by weight of trehalose (total weight in each case based on the crystalline phase).

2. Fondant according to claim 1, wherein the particle size of the isomaltulose in the crystalline phase is 90% < 50 µm.

3. Fondant according to claim 1 or 2, wherein the sweetness enhancer is a plant extract.

4. Fondant according to any one of the preceding claims, wherein the fondant contains 0.9 to 40% by weight of water (based on the total weight of the fondant).

5. Fondant according to any one of the preceding claims, wherein the fondant contains 0.01 to 0.3% by weight (total weight of thickener based on DS of the fondant) of thickener selected from the group consisting of agar, carrageenan and xanthan gum.

6. Fondant according to any one of the preceding claims, wherein the fondant contains 0.01 to 3% by weight (total weight of acid based on DS of the fondant) of a food-grade organic acid, a flavor or both.

7. Fondant according to claim 6, wherein the food-grade organic acid is citric acid or lactobionic acid.

8. Method for preparing a fondant, in particular a fondant according to claims 1 to 7, wherein in a method step a) crystalline isomaltulose is mixed with a non-crystalline phase containing glucose syrup and water, in a method step b) isomaltulose seed crystals are added to the mixture obtained in method step a) and in a method step c) at least one sweetness enhancer is added to the mixture obtained in method step b), whereby a fondant is obtained.

9. Method according to claim 8, wherein in method step a) crystalline isomaltulose and crystalline trehalose are mixed with the non-crystalline phase.

10. Method according to any one of claims 8 or 9, wherein in method step a) the crystalline isomaltulose and the optionally present crystalline trehalose are completely dissolved in the non-crystalline phase while being heated.

11. Use of the fondant **characterized in** any one of claims 1 to 7 as a coating for food products or semi-luxury foods, in particular baked goods or as a filling for sweets.

12. Use according to claim 11, wherein the fondant is present for use in semi-solid or liquid form with a water content of 7 to 40%.

13. Use according to claim 11 or 12, wherein the fondant is used as a coating, and as a finished, dried coating has a water content of 0.3 to 0.5%.

14. Use according to any one of claims 11 to 13, wherein the baked good is a deep-fried pastry, a cake, a torte, a cookie, a waffle, a confectionery product, a patisserie product or the like.

15. A food product or semi-luxury food that is completely or partially coated with a fondant according to any one of claims 1 through 7.

16. Food product or semi-luxury food according to claim 15, wherein the fondant is transparent.

17. A sweet containing a fondant according to any one of claims 1 to 7 as a filling.

## Revendications

1. Fondant, contenant 0,1 à 1,0 % en poids d'au moins un exhausteur de goût sucré (poids total de l'exhausteur de goût sucré par rapport à la matière sèche (TS) du fondant) et un système de sucres constitué d'une phase cristalline et d'une phase non cristalline, dans lequel le fondant présente 65 à 95 % en poids d'au moins un sucre (poids total du sucre dans la phase cristalline par rapport à la TS du fondant) sous la forme d'une phase cristalline et 4 à 34 % en poids de sirop de glucose sous la forme d'une phase non cristalline (poids total du sirop de glucose dans la phase non cristalline par rapport à la TS du fondant) et dans lequel la phase cristalline est composée d'isomaltulose, ou est composée d'un mélange d'isomaltulose et de tréhalose qui comprend 40 à 99 % en poids d'isomaltulose et 60 à 1 % en poids de tréhalose, ou est composée d'un mélange d'isomaltulose, de tréhalose et de saccharose qui comprend 40 à 99 % en poids d'isomaltulose et 60 à 1 % en poids de tréhalose (poids total respectivement par rapport la phase cristalline).

2. Fondant selon la revendication 1, dans lequel la taille des particules de l'isomaltulose dans la phase cristalline est à 90 % < 50 µm.

3. Fondant selon la revendication 1 ou 2, dans lequel l'exhausteur de goût sucré est un extrait de plante.

4. Fondant selon une des revendications précédentes, dans lequel le fondant contient 0,9 à 40 % en poids d'eau (par rapport au poids total du fondant).

5. Fondant selon une des revendications précédentes, dans lequel le fondant contient 0,01 à 0,3 % en poids d'agent épaississant (poids total de l'agent épaississant par rapport à la TS du fondant) choisi dans le groupe composé d'agar, de caragheen et de xanthane.

6. Fondant selon une des revendications précédentes, dans lequel le fondant contient 0,01 à 3 % en poids (poids total de l'acide par rapport à la TS du fondant) d'un acide organique alimentaire, d'un arome ou des deux.

7. Fondant selon la revendication 6, dans lequel l'acide organique alimentaire est de l'acide citrique ou de l'acide lactobionique.

8. Procédé de préparation d'un fondant, en particulier d'un fondant selon les revendications 1 à 7, dans lequel, dans une étape de procédé a) on mélange de l'isomaltulose cristallin avec une phase non-cristalline, contenant du sirop de glucose, et
de l'eau, dans une étape de procédé b) on ajoute des germes cristallins d'isomaltulose au mélange obtenu dans l'étape de procédé a) et dans une étape de procédé c) on ajoute au moins un exhausteur de goût sucré au mélange obtenu dans l'étape de procédé b) et
dans lequel on obtient un fondant.

9. Procédé selon la revendication 8, dans lequel dans une étape de procédé a) on mélange de l'isomaltulose cristallin et du tréhalose cristallin avec la phase non cristalline.

10. Procédé selon une des revendications 8 ou 9, dans lequel dans l'étape de procédé a) on dissout complètement l'isomaltulose cristallin et le tréhalose cristallin présent en option par un chauffage dans la phase non cristalline.

11. Utilisation du fondant caractérisé selon une des revendications 1 à 7 sous forme d'enrobage de denrées alimentaires ou de consommation plaisir, en particulier de produits de boulangerie, ou de fourrage de confiserie.

12. Utilisation selon la revendication 11, dans lequel le fondant est prévu pour l'utilisation sous forme semi-solide ou liquide avec une teneur en eau de 7 à 40 %.

13. Utilisation selon la revendication 11 ou 12, dans lequel le fondant est utilisé sous forme d'enrobage et, en tant qu'enrobage fini sec, présente une teneur en eau de 0,3 à 0,5 %.

14. Utilisation selon une des revendications 11 à 13, dans lequel le produit de boulangerie est un beignet, une tarte, un gâteau, un biscuit, une gaufre, un produit de boulangerie-pâtisserie, un produit de pâtisserie ou similaire.

15. Produit alimentaire ou de consommation plaisir, qui est totalement ou
partiellement recouvert d'un fondant selon les revendications 1 à 7.

16. Produit alimentaire ou de consommation plaisir selon la revendication 15, dans lequel le fondant est transparent.

17. Confiserie qui contient un fondant selon une des revendications 1 à 7 servant de fourrage.
